# EUROPÄISCHE PATENTSCHRIFT

(11) **EP 1 163 104 B1**
(45) Veröffentlichungstag und Bekanntmachung des Hinweises auf die Patenterteilung: **11.12.2002**
(21) Anmeldenummer: 00918710.5
(22) Anmeldetag: 24.03.2000
(51) Int. Cl.: B29C 65/36, B29C 65/00, F02M 35/10

(54) **VERFAHREN ZUM VERBINDEN VON ZWEI KUNSTSTOFFBAUTEILEN**
METHOD FOR LINKING TWO PLASTIC COMPONENTS
PROCEDE D'ASSEMBLAGE DE DEUX COMPOSANTS PLASTIQUES

(30) Priorität: 25.03.1999 DE 19913500
(43) Veröffentlichungstag der Anmeldung: 19.12.2001
(73) Patentinhaber: MAHLE Filtersysteme GmbH, 70376 Stuttgart (DE)
(72) Erfinder: BRODESSER, Kai, D-71277 Rutesheim (DE); DRESPLING, Hans, Peter, D-89522 Heidenheim (DE); JENSEN, Hans, D-73237 Kirchheim (DE); KACHLER, Günter, D-74379 Ingersheim (DE); SCHNEIDER, Horst, D-71336 Waiblingen (DE); STEHLIG, Jürgen, D-72666 Neckartailfingen (DE)
(74) Vertreter: Patentanwalts-Partnerschaft, Rotermund + Pfusch + Bernhard
(86) Internationale Anmeldenummer: DE0000882
(87) Internationale Veröffentlichungsnummer: WO00058075

(56) Entgegenhaltungen:
- EP-A- 0 019 497
- EP-A- 0 567 702
- CH-A- 658 888

## Beschreibung

Die Erfindung betrifft ein Verfahren zum Verbinden eines ersten Bauteiles aus Kunststoff mit einem zweiten Bauteil aus Kunststoff mit den Merkmalen des Oberbegriffes des Anspruches 1.

Aus der CH 658 888 A5 ist ein derartiges Verfahren bekannt, bei dem das erste Bauteil in einem Verbindungsbereich, in dem die Verbindung mit dem zweiten Bauteil ausgebildet werden soll, mit einem Heizelement ausgestattet wird, das aus einem elektrischen Leiter besteht. Das zweite Bauteil wird so am ersten Bauteil angebracht, daß beide Bauteile am Heizelement zur Anlage kommen. Zu diesem Zweck sind die Bauteile im Verbindungsbereich nach Art einer Nut-Feder-Steckverbindung ausgebildet, wobei am einen Bauteil eine Nut ausgebildet ist, in die eine am anderen Bauteil ausgebildete Feder einsteckbar ist. Bei einer besonderen Ausgestaltung des bekannten Verfahrens weist die Steckverbindung Dichtmittel in Form von Vorsprüngen und damit zusammenwirkenden Rücksprüngen auf, durch die in der Nut ein gegenüber Schmelze abgedichteter Raum ausgebildet wird, in dem das Heizelement angeordnet wird. Durch Anlegen von Strom an das Heizelement wird ein elektrisches Widerstandsschweißverfahren durchgeführt, bei dem das Heizelement soweit erhitzt wird, daß beide Bauteile in der Umgebung des Heizelementes anschmelzen und miteinander verschmelzen. Darüber hinaus kann während der Durchfuhrung des Schweißverfahrens an den Bauteilen eine Kraft angreifen, die eine Verstellung der Bauteile entgegen der Einsteckrichtung behindert.

Aus der EP 0 019 497 A1 ist ein Verfahren zur Herstellung einer formschlüssigen Verbindung zwischen einem Rand eines Kunststoffbauteils und einem Aluprofil bekannt. Dieses Aluprofil besitzt einen Hohlraum, in den der Rand des Kunststoffbauteils zusammen mit einem elektrischen Leiter eingesteckt wird. Danach wird der elektrische Leiter induktiv erwärmt, wodurch der Kunststoffrand weich wird. Durch einen entsprechenden Druck, der den Rand in den Hohlraum antreibt, wird erreicht, daß der erweichte Rand sich aufweitet und den Hohlraum letztlich ausfüllt. Nach dem Erhärten des Kunststoffs ist das Aluprofil formschlüssig mit dem Rand verbunden.

Aus der E? 0 567 702 A1 ist ein Ansaugluftverteiler bekannt, der zusammen mit seinen Saugrohren einteilig hergestellt ist. An diese Saugrohre wird ein gemeinsamer Flansch angespritzt.

Bei einem derartigen Verfahren wird üblicherweise das erste Bauteil in einem Verbindungsbereich, in dem die Verbindung mit dem zweiten Bauteil ausgebildet werden soll, mit mindestens einem Heizelement ausgestattet, das aus einem elektrischen Leiter besteht und durch elektromagnetische Induktion berührungslos erhitzt werden kann. Anschließend wird das zweite Bauteil so am ersten Bauteil angebracht, daß beide Bauteile am Heizelement zur Anlage kommen. Im Anschluß daran wird ein elektromagnetisches Widerstandsschweißverfahren durchgeführt, bei dem das Heizelement induktiv soweit erhitzt wird, daß beide Bauteile in der Umgebung des Heizelementes anschmelzen und miteinander verschmelzen.

Wenn die Kunststoffe der miteinander zu verbindenden Bauteile stark unterschiedliche Viskositäten aufweisen, führt dies bei der Durchführung des Schweißverfahrens dazu, daß sich die Niederviskose Schmelze nicht oder nur geringfügig mit der hochviskosen Schmelze vermischt, so daß eine stoffschlüssige Verschmelzung der Bauteile im Verbindungsbereich nicht oder nur unvollkommen stattfinden kann. Die bei einer solchen Kunststoffkombination mit einem herkömmlichen Verbindungsverfahren erzielbare Festigkeit der Verbindung ist somit für viele Anwendungen nicht ausreichend. Beispielsweise kann das eine Bauteil ein durch ein Blasformverfahren hergestelltes Saugrohr einer Sauganlage einer Brennkraftmaschine sein, daß mit einem Luftverteiler dieser Sauganlage verbunden werden soll, der dann das andere Bauteil bildet. Wenn z.B. das Saugrohr durch ein Blasformverfahren hergestellt wird, besteht es aus einem Kunststoff mit relativ hoher Viskosität. Im Unterschied dazu kann der Luftverteiler durch ein Spritzgußverfahren hergestellt sein, so daß dieser aus einem Kunststoff mit relativ niedriger Viskosität besteht. Eine derartige Sauganlage ist aufgrund der während des Betriebs der Brennkraftmaschine auftretenden Drücke und Druckschwankungen hohen statischen und dynamischen Belastungen ausgesetzt. Die Verbindung zwischen Saugrohr und Luftverteiler muß dabei diesen Beanspruchungen standhalten und eine lange Lebenszeit gewahrleisten. Eine mit einem herkömmlichen Verfahren der eingangs genannten Art hergestellte Verbindung zwischen Saugrohr und Luftverteiler kann diese Anforderungen nicht erfüllen.

Die vorliegende Erfindung beschäftigt sich mit dem Problem, ein Verfahren der eingangs genannten Art dahingehend auszugestalten, daß zwischen zwei Kunststoffbauteilen eine hochwertige stoffschlüssige Verbindung auch dann ausgebildet werden kann, wenn die Kunststoffe der beiden Bauteile relativ stark unterschiedliche Viskositaten aufweisen.

Dieses Problem wird erfindungsgemäß durch ein Verfahren mit den Merkmalen des Anspruches 1 gelöst.

Die Erfindung beruht auf dem allgemeinen Gedanken, den Verbindungsbereich der miteinander zu verbindenden Bauteile so auszugestalten, daß wahrend der Durchführung des Schweißverfahrens die Schmelze mit einem relativ hohen Druck beaufschlagt werden kann. Die Erfindung nutzt dabei die Erkenntnis, daß sich unterschiedlich Viskose Schmelzen unter Druck besser durchmischen, wodurch die Ausbildung einer intensiven Verschmelzung zu einer hochwertigen stoffschlüssigen Verbindung unterstützt wird. Um in der Schmelze einen Druckanstieg zu erzielen, wird der Verbindungsbereich als Nut-Feder-Steckverbindung ausgestaltet, der in der Nut einen Raum ausbildet, in dem das Heizelement angeordnet ist und der durch Dichtmittel gegenüber Schmelze abgedichtet und insoweit verschlossen ist. Zum anderen wird das Verfahren so ausgestaltet, daß während der Durchführung des Schweißverfahrens an den Bauteilen eine Kraft angreift, die eine Verstellung der Bauteile entgegen der Einsteckrichtung der Steckverbindung behindert. Durch diese Maßnahmen kann sich bei der Durchfuhrung des Schweißverfahrens in der Schmelze der erwünschte Druckanstieg ausbilden.

Beispielsweise kann das Heizelement so gestaltet sein, daß es den in der Nut ausgebildeten Raum nahezu ausfüllt. Während des Schweißverfahrens wird Schmelze gebildet, die sich aufgrund der zunehmenden Erwärmung auszudehnen sucht. Da eine Relativbewegung zwischen Feder und Nut entgegen der Einsteckrichtung durch die an den Bauteilen angreifende Kraft behindert wird, bleibt das Volumen des geschlossenen Raumes insoweit konstant, so daß es zum gewünschten Druckanstieg in der Schmelze kommt.

Bei der vorliegenden Erfindung weist die Steckverbindung quer zur Steckrichtung ein Spiel auf, durch das zwischen Nut und Feder ein Drosselspalt ausgebildet ist, wobei dieser Drosselspalt die Dichtmittel der Steckverbindung gegenüber Schmelze bildet. Während der Durchführung des Schweißverfahrens dringt dann beim Schmelzen der zum Heizelement benachbarten Bauteilbereiche die Feder tiefer in die Nut ein, wobei Schmelze in den Drosselspalt eintritt. Die im Drosselspalt erzeugte Drosselwirkung bewirkt dann den gewunschten Druckanstieg in der Schmelze. Da die Dichtung durch den Drosselspalt gebildet ist, können zusätzliche Dichtungsbauteile entfallen. Außerdem erleichtert das Spiel das Einstecken der Feder in die Nut. Darüber hinaus wird durch das Eindringen der Schmelze in den Drosselspalt die an der Verbindung beteiligte Oberfläche um ein Vielfaches vergrößert, wodurch die Festigkeit der so gebildeten Verbindung deutlich verbessert ist. Insbesondere können dabei auch Bereiche von Feder und Nut innerhalb des Drosselspaltes angeschmolzen und miteinander verschmolzen werden.

Entsprechend einer Weiterbildung des erfindungsgemäßen Verfahrens können die Erstreckungen des Drosselspaltes in Einsteckrichtung und quer dazu so dimensioniert sein, daß der durch die Drosselwirkung in der Schmelze erzeugte Druckanstieg eine an Feder und Nut angreifende, entgegen der Einsteckrichtung wirkende Druckkraft erzeugt, die bei Erreichen einer vorbestimmten Eindringtiefe der Feder in die Nut betragsmäßig gleich groß ist wie die Einsteckkraft. Mit anderen Worten: die Nut-Feder-Steckverbindung ist so ausgelegt, daß bei der Durchführung des Schweißverfahrens die Einsteckbewegung zum Stillstand kommt, sobald in der Schmelze der gewünschte Druck herrscht. Auf diese Weise läßt sich eine besonders hohe Qualität der Verbindung gewährleisten. Außerdem wird dadurch ein zu tiefes Eindringen der Feder in die Nut verhindert, was zu einem Schmelzaustrieb aus der Nut führen würde. Insbesondere wenn es sich bei einem der Bauteile um ein Saugrohr handelt, muß ein derartiger Schmelzaustrieb zumindest auf der durchströmten Innenseite des Saugrohres verhindert werden, um die optimierte Durchströmung des Saugrohres nicht zu stören.

Weitere wichtige Merkmale und Vorteile des erfindungsgemäßen Verfahrens ergeben sich aus den Unteransprüchen, aus den Zeichnungen und aus der zugehörigen Figurenbeschreibung anhand der Zeichnungen.

Ein bevorzugtes Ausführungsbeispiel der Erfindung ist in den Zeichnungen dargestellt und wird in der nachfolgenden Beschreibung näher erläutert.
- Fig. 1: zeigt einen schematisierten Schnitt durch eine Sauganlage einer Brennkraftmaschine, die unter Verwendung des erfindungsgemäßen Verfahrens hergestellt ist,
- Fig. 2: zeigt eine vergrößerte Detailansicht eines in Fig. 1 mit II gekennzeichneten Ausschnittes und
- Fig. 3: zeigt eine nochmals vergrößerte Detailansicht eines in Fig. 2 mit III gekennzeichneten Ausschnittes, jedoch einer anderen Ausführungsform.

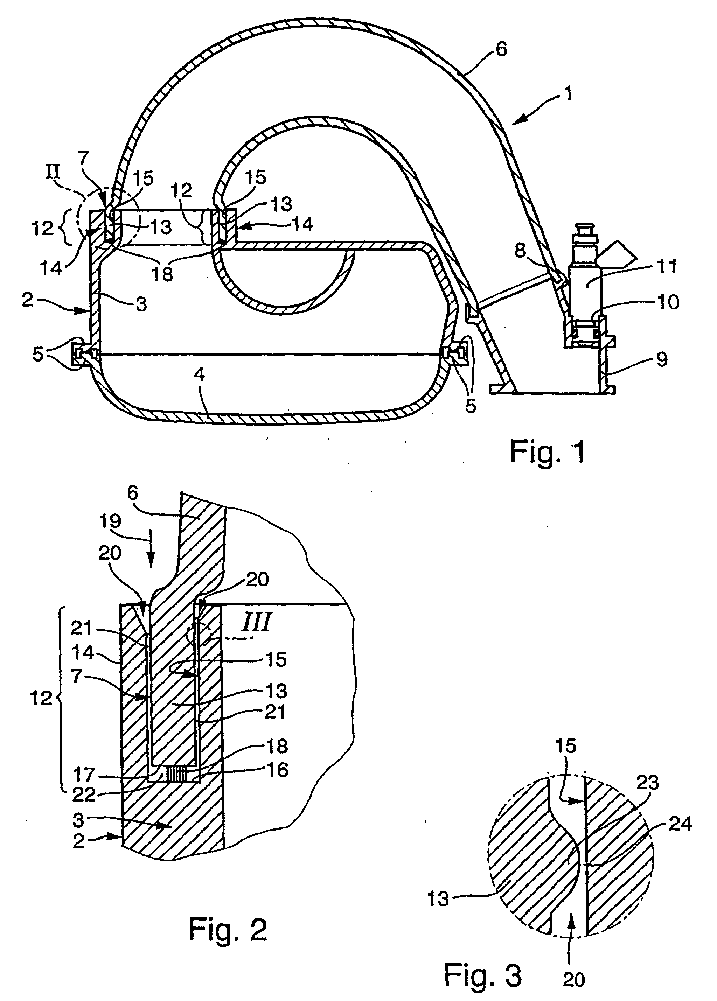

Entsprechend Fig. 1 weist eine modular aufgebaute Sauganlage 1, die bei einer nicht dargestellten Brennkraftmaschine von einer Luftzuführung zugeführte und für die Verbrennung in der Brennkraftmaschine vorgesehene Luft auf einzelne Brennkammern der Brennkraftmaschine verteilt, ein Luftverteilermodul bzw. einen Luftverteiler 2 auf, der selbst modular aufgebaut ist und aus einem oberen einteiligen Oberteilmodul bzw. Oberteil 3 und aus einem unteren einteiligen Unterteilmodul bzw. Unterteil 4 besteht. Die Luftverteilermodule 3 und 4 weisen jeweils einen nach außen abstehenden, vollständig umlaufenden Kragen oder Bund 5 auf, an denen die beiden Module 3 und 4, insbesondere durch ein Reibschweißverfahren, miteinander verbunden sind.

An der Oberseite des Luftverteileroberteils 3 sind mehrere einteilige Saugrohrmodule oder Saugrohre 6 angeschlossen bzw. mit Hilfe des erfindungsgemäßen Verfahrens damit verbunden, was weiter unten noch näher erläutert wird. In Fig. 1 ist jedoch nur eines der Saugrohre 6 dargestellt, da die in Blickrichtung hinter der Schnittebene angeordneten Bestandteile der Sauganlage 1 zur Vereinfachung der Darstellung weggelassen sind. Das Saugrohr 6 ist einenends an einem ersten Rohrende 7 mit dem Luftverteiler 2 und anderenends an einem zweiten Rohrende 8.mit einem Flanschmodul oder Flansch 9 verbunden, der an der Brennkraftmaschine befestigbar ist. Durch das Saugrohr 6 bzw. durch die Saugrohre 6 kann somit die in den Luftverteiler 2 eingebrachte Luft in die jeweils zugeordnete Brennkammer der Brennkraftmaschine gelangen. Im Flansch 9 ist außerdem eine Aufnahme 10 ausgespart, in der ein Einspritzventil 11 montierbar ist, das in Fig. 1 lediglich angedeutet ist.

Die Herstellung der Sauganlage 1 kann wie folgt durchgeführt werden:

Zunächst werden die Saugrohre 6 hergestellt, was z.B. mit Hilfe eines Blasformverfahrens durchgeführt wird, wodurch die Form der Saugrohre 6 zur Ausbildung unterschiedlicher Sauganlagenvarianten relativ einfach variiert werden kann. Die jeweils einem Flansch 9 zugeordneten Saugrohre 6 werden dann zumindest mit ihren Rohrenden 8 in eine Spritzgußform eingelegt. Danach kann ein Spritzgußverfahren ablaufen, bei dem der Flansch 9 ausgebildet wird. Bei diesem Spritzvorgang wird das Rohrende 8 beidseitig, das heißt bezüglich des Saugrohres 6 innen und außen vom Kunststoff des Flansches 9 eingefaßt bzw. darin eingebettet. Durch die Geometrie des Rohrendes 8 wird dabei eine hochwirksame Verankerung des Saugrohres 6 im Flansch 9 ausgebildet, durch die das Rohrende 8 formschlüssig mit dem Flansch verbunden ist. Um zwischen dem Saugrohr 6 und dem Flansch 9 außerdem eine hochwertig feste und dichte stoffschlüssige Verbindung auszubilden, wird ein spezielles Verbindungsverfahren durchgeführt.

Nach der Anformung des Flansches 9 an die Saugrohre 6 werden die vom Flansch 9 abgewandten Rohrenden 7 der Saugrohre 6 mit dem Luftverteiler 2 verbunden, wozu ein durch eine geschweifte Klammer gekennzeichneter Verbindungsbereich 12 als Feder-Nut-Steckverbindung ausgebildet ist. Für diese Steckverbindung ist das Rohrende 7 des Saugrohres 6 als vollständig umlaufende, zylindrische, ringförmige Feder 13 ausgebildet, während am Luftverteileroberteil 3 eine Aufnahme 14 ausgebildet ist, die eine zur Feder 13 komplementäre geschlossen umlaufende, ringförmige, im Längsschnitt U-förmige Nut 15 enthält. Zwischen einem Nutgrund 16 der Nut 15 und einer Federstirn 17 der Feder 13 ist ein Ringraum 22 ausgebildet, in dem ein als Ring ausgebildetes Heizelement 18 angeordnet ist, das aus einem elektrisch leitenden Material, wie z.B. Metall, insbesondere Kupfer, Eisen, oder Graphit besteht.

Entsprechend dem erfindungsgemäßen Verfahren wird zur Ausbildung der Verbindung zwischen dem Luftverteileroberteil 3 und dem Saugrohr 6 zunächst das Heizelement 18 in die Nut 15 eingebracht und danach die Feder 13 in die Nut 15 eingesteckt. Das Heizelement 18 kommt dabei mit der Federstirn 17 und dem Nutgrund 16 in Kontakt. Die Einsteckrichtung der Nut-Feder-Steckverbindung ist in Fig. 2 durch einen Pfeil 19 symbolisiert.

Quer zur Einsteckrichtung 19 ist zwischen der Feder 13 und der Nut 15 sowohl radial innen als auch radial außen ein Spiel 20 ausgebildet, durch das auf der Innenseite der Feder 13 und auf deren Außenseite jeweils zwischen Feder 13 und einer gegenüberliegenden Nutwandung ein Drosselspalt 21 ausgebildet ist. Beispielsweise beträgt die Spaltbreite des Drosselspaltes 21 sowohl auf der Innenseite als auch auf der Außenseite der Feder 13 jeweils 0,1 bis 0,4 mm, während die Spaltlänge bzw. die Eindringtiefe der Feder 13 in die Nut 15 etwa 12 mm beträgt.

In dem in Fig. 2 dargestellten Zustand ist die Verbindung zwischen Saugrohr 6 und Luftverteiler 2 noch nicht ausgebildet. Wenn durch ein entsprechendes elektromagnetisches Wechselfeld das Heizelement 18 erwärmt wird, führt dies dazu, daß der Kunststoff der Feder 13 im Bereich der Federstirn 17 und der Kunststoff der Aufnahme 14 im Bereich des Nutgrundes 16 anschmelzen und jeweils eine Schmelze bilden.

Während des Schweißvorganges greift am Saugrohr 6 und am Oberteil 3 eine Einsteckkraft an, die die Feder 13 in die Nut 15 anzutreiben sucht. Dadurch dringt einerseits die Feder 13 tiefer in die Nut 15 ein, andererseits wird somit Schmelze in die Drosselspalte 21 verdrängt. Folglich werden in den Drosselspalten 21 auch Wandungsbereiche der Feder 13 und der Nut 15 erwärmt und insbesondere angeschmolzen.

Durch eine gezielte Dimensionierung von Nut 15 und Feder 13 werden eine Spaltbreite, das ist die Erstreckung des Drosselspaltes 21 quer zur Einsteckrichtung 19, und eine Spaltlänge, das ist die Erstreckung des Drosselspaltes 21 in Einsteckrichtung 19, erzielt, die eine Drosselwirkung und somit eine Dichtung für die in den Drosselspalt 21 eintretende Schmelze erzeugen. Durch diese Drosselwirkung wird in der Schmelze ein Druckanstieg erzeugt, der einerseits eine der Einsteckkraft entgegenwirkende, an Feder 13 und Nut 15 angreifende Druckkraft erzeugt. Andererseits unterstützt der Druckanstieg in der Schmelze die Durchmischung des Kunststoffes der Feder 13 mit dem Kunststoff der Nut 15.

Nach der Durchführung dieses Induktionsschweißverfahrens befindet sich die Feder 13 tiefer in der Nut 15 als in Fig. 2 dargestellt und das Heizelement 18 ist vollständig in Kunststoff eingebettet. Im günstigsten Fall sind die Drosselspalte 21 vollständig mit Kunststoff ausgefüllt und in einem großen Oberflächenbereich zwischen Feder 13 und Nut 15 ist außerdem eine stoffschlüssige Verbindung zwischen dem Saugrohr 6 und dem Luftverteileroberteil 3 ausgebildet, durch die das Rohrende 7 quasi einteilig in die Aufnahme 14 integriert ist.

Beim Eindringen der Schmelze in die Drosselspalte 21 entfernt sich diese Schmelze vom Heizelement 18, so daß es in vom Heizelement 18 entfernten Bereichen der Drosselspalte 21 zu einer Erstarrung der Schmelze kommen kann, die zusätzlich eine hochwirksame Dichtung zwischen Feder 13 und Nut 15 erzeugt und den erforderlichen Druckanstieg in der Schmelze zusätzlich unterstützt. Nach Beendigung der induktiven Erwärmung kühlt das Heizelement 18 relativ langsam ab, so daß Spannungen im Verbindungsbereich 12 abgebaut werden können.

Während gemäß Fig. 2 der Drosselspalt 21 eine Dichtung bzw. Dichtmittel ausbildet, kann bei einer anderen Ausführungsform gemäß Fig. 3 zusätzlich oder alternativ ein Dichtungswulst 23 zwischen Feder 13 und Nut 15 angeordnet sein. Hier ist dieser Dichtungswulst 23 einteilig mit der Feder 23 ausgebildet. Da dieser Dichtungswulst 23 die Nut-Feder-Steckverbindung 12 einerseits gegenüber Schmelze dichten soll und andererseits aber luftdurchlässig sein soll, damit während des Schmelzvorganges verdrängte Luft aus der Nut 15 entweichen kann, muß der Dichtungswulst 23 nicht oder nicht vollständig an der Nutwandung zur Anlage kommen, was hier durch einen Luftspalt 24 angedeutet ist.

Durch das erfindungsgemäße Verfahren können durch den in der Schmelze erzielbaren Druck Kunststoffe miteinander Verschmolzen werden, deren Viskositäten stark unterschiedlich sind. Die Erfindung ist jedoch nicht darauf beschränkt, ebenso können beliebige kompatible Kunststoffe durch das Verfahren nach der Erfindung miteinander stoffschlüssig verbunden werden. Das erfindungsgemäße Verfahren ist jedoch von besonderem Vorteil wenn das zweite Bauteil 6 als Blasteil, das heißt als ein durch ein Blasformverfahren hergestelltes Bauteil, ausgebildet ist. Bevorzugt sollten die Kunststoffe der beiden Bauteile 2, 6 ihre jeweilige Schmelztemperatur etwa im gleichen Temperaturbereich aufweisen. Das Verfahren nach der Erfindung kann auch dann verwendet werden, wenn die Bauteile 2, 6 jeweils aus einem Polyamid-Kunststoff bestehen. Auch können die Bauteile 2, 6 jeweils aus einem faserverstärkten, insbesondere glas- oder kohlefaserverstärkten, Kunststoff, insbesondere Polyamid-Kunststoff bestehen.

## Patentansprüche

1. Verfahren zum Verbinden eines ersten Bauteiles (2) aus Kunststoff mit einem zweiten Bauteil (6) aus Kunststoff,
wobei das erste Bauteil (2) in einem Verbindungsbereich (12), in dem die Verbindung mit dem zweiten Bauteil (6) ausgebildet werden soll, mit mindestens einem Heizelement (18) ausgestattet wird, das aus einem elektrischen Leiter besteht,
wobei das zweite Bauteil (6) so am ersten Bauteil (2) angebracht wird, daß beide Bauteile (2, 6) am Heizelement (18) zur Anlage kommen,
wobei die Bauteile (2, 6) im Verbindungsbereich (12) nach Art einer Nut-Feder-Steckverbindung ausgebildet sind,
wobei am einen Bauteil (2) eine Nut (15) ausgebildet ist, in die eine am anderen Bauteil (6) ausgebildete Feder (13) einsteckbar ist,
wobei die Steckverbindung Dichtmittel (21; 23) aufweist, durch die in der Nut (15) ein gegenüber Schmelze abgedichteter Raum (22) ausgebildet wird, in dem das Heizelement (18) angeordnet wird,
wobei ein elektrisches Widerstandsschweißverfahren durchgeführt wird, bei dem das Heizelement (18) soweit erhitzt wird, daß beide Bauteile (2, 6) in der Umgebung des Heizelementes (18) anschmelzen und miteinander verschmelzen, und
wobei während der Durchführung des Schweißverfahrens an den Bauteilen (2, 6) eine Kraft angreift, die eine Verstellung der Bauteile (2, 6) entgegen der Einsteckrichtung (19) behindert,
**dadurch gekennzeichnet,**
**daß** das Heizelement (18) aus einem elektrischen Leiter besteht, der durch elektromagnetische Induktion berührungslos erhitzt werden kann,
**daß** das Widerstandsschweißverfahren elektromagnetisch arbeitet, derart, daß das Heizelement (18) induktiv erhitzt wird,
**daß** die Steckverbindung quer zur Steckrichtung (19) ein Spiel (20) aufweist, durch das zwischen Nut (15) und Feder (13) wenigstens ein Drosselspalt (21) ausgebildet ist, der die Dichtmittel bildet, und
**daß** beim Schmelzen der dem Heizelement (18) benachbarten Bauteilbereiche (16, 17) die Feder (13) tiefer in die Nut (15) eindringt, wobei Schmelze in den Drosselspalt (21) eintritt,
wobei durch die Drosselwirkung ein Austreten der Schmelze aus der Nut (15) behindert wird.

2. Verfahren nach Anspruch 1,
**dadurch gekennzeichnet,**
**daß** während der Durchführung des Schweißverfahrens auf die Bauteile (2, 6) eine in Einsteckrichtung (19) wirkende Einsteckkraft aufgebracht wird.

3. Verfahren nach Anspruch 1 oder 2,
**dadurch gekennzeichnet,**
**daß** das Heizelement (18) zwischen einem Nutgrund (16) der Nut (15) und einer Federstirn (17) der Feder (13) angeordnet wird.

4. Verfahren nach einem der Ansprüche 1 bis 3,
**dadurch gekennzeichnet,**
**daß** die Erstreckungen des Drosselspaltes (21) in Einsteckrichtung und quer dazu so dimensioniert sind, daß ein durch die Drosselwirkung in der Schmelze erzeugter Druckanstieg eine an Feder (13) und Nut (15) angreifende, entgegen der Einsteckrichtung (19) wirkende Druckkraft erzeugt, die bei Erreichen einer vorbestimmten Eindringtiefe der Feder (13) in die Nut (15) betragsmäßig gleich groß ist wie die Einsteckkraft.

5. Verfahren nach einem der Ansprüche 1 bis 4,
**dadurch gekennzeichnet,**
**daß** ein Verhältnis von Spalterstreckung in Einsteckrichtung (19) zu Spalterstreckung quer zur Einsteckrichtung (19) in einem Bereich von 10 bis 200, insbesondere von 15 bis 120, liegt.

6. Verfahren nach einem der Ansprüche 1 bis 5,
**dadurch gekennzeichnet,**
**daß** die Bauteile (2, 6) zumindest im Verbindungsbereich (12) rohrformig ausgebildet sind, wobei die Feder (13) und die Nut (15) jeweils zylindrisch ausgebildet sind.

7. Verfahren nach Anspruch 6,
**dadurch gekennzeichnet,**
**daß** die zylindrische Feder (13) und die zylindrische Nut (15) einen kreisförmigen oder elliptischen oder ovalen Querschnitt aufweisen.

8. Verfahren nach einem der Ansprüche 1 bis 7,
**dadurch gekennzeichnet,**
**daß** der Kunststoff des einen Bauteiles (6) relativ zum Kunststoff des anderen Bauteiles (2) eine hohe Viskosität aufweist.

9. Verfahren nach einem der Ansprüche 1 bis 8,
**dadurch gekennzeichnet,**
**daß** das zweite Bauteil ein Saugrohr (6) einer Sauganlage (1) ist, die bei einer Brennkraftmaschine die für die Verbrennung in der Brennkraftmaschine vorgesehene Luft von einer Luftzuführung erhält und auf einzelne Brennkammern der Brennkraftmaschine verteilt, und daß das erste Bauteil ein Luftverteiler (2) der Sauganlage (1) ist, der an die Luftzuführung der Brennkraftmaschine anschließbar ist.

10. Verfahren nach Anspruch 9,
**dadurch gekennzeichnet,**
**daß** die Sauganlage (1) einen modularen Aufbau aufweist, mit einem Luftverteilermodul (2) aus Kunststoff, mit mehreren, jeweils einteiligen Saugrohrmodulen (6) aus Kunststoff, die jeweils an ihrem einen Rohrende (7) mit dem Luftverteilermodul (2) verbunden werden und die jeweils einer der Brennkammern der Brennkraftmaschine zugeordnet sind, und mit mindestens einem einteiligen Flanschmodul (9) aus Kunststoff, mit dem mindestens eines der Saugrohrmodule (6) an seinem anderen Ende (8) verbunden ist.

## Claims

1. Method for connecting a first component (2) made of plastics material to a second component (6) made of plastics material, the first component (2) being equipped in a connecting region (12) in which the connection to the second component (6) is to be made, with at least one heating element (18) consisting of an electrical conductor, the second component (6) being arranged on the first component (2) in such a way that both components (2, 6) come to rest on the heating element (18), the components (2, 6) being designed in the manner of a tongue and groove plug-in connection in the connecting region (12), a groove (15) being formed on the one component (2) into which a tongue (13) formed on the other component (6) can be inserted, the plug-in connection having sealing means (21; 23) via which a space (22) sealed from melt is formed in the groove (15) and in which the heating element (18) is arranged, an electric resistance welding process being carried out in which the heating element (18) is heated until both components (2, 6) melt in the environment of the heating element (18) and fuse together, and a force which impedes displacement of the components (2, 6) counter to the plug-in direction (19) acting on the components (2, 6) while the welding process is being carried out, **characterised in that** the heating element (18) consists of an electrical conductor which can be contactlessly heated by electromagnetic induction, **in that** the resistance welding process operates electromagnetically in such a way that the heating element (18) is heated inductively, **in that** the plug-in connection has a clearance (20) transversely to the plug-in direction (19), via which at least one flow restrictor gap (21), which forms the sealing means, is formed between groove (15) and tongue (13) and **in that** during melting of the component regions (16, 17) adjacent to the heating element (18) the tongue (13) penetrates more deeply into the groove (15), wherein melt enters the flow restrictor gap (21), the melt being impeded from escaping from the groove (15) by the flow restriction effect.

2. Method according to claim 1, **characterised in that** a plug-in force acting in the plug-in direction (19) is applied to the components (2, 6) while the welding process is carried out.

3. Method according to claim 1 or 2, **characterised in that** the heating element (18) is arranged between a groove base (16) of the groove (15) and an end (17) of the tongue (13).

4. Method according to any of claims 1 to 3, **characterised in that** the extensions of the flow restrictor gap (21) in the plug-in direction and transversely thereto are dimensioned such that an increase in pressure generated in the melt by the flow restriction effect generates a pressure force acting on tongue (13) and groove (15) and acting counter to the plug-in direction (19), which on attainment of a predetermined penetration depth of the tongue (13) into the groove (15) is equal to the plug-in force.

5. Method according to any of claims 1 to 4, **characterised in that** a ratio of gap extension in the plug-in direction (19) to gap extension transversely to the plug-in direction (19) is in a range of 10 to 200, in particular of 15 to 120.

6. Method according to any of claims 1 to 5, **characterised in that** the components (2, 6) are tubular in design, at least in the connecting region (12), the tongue (13) and the groove (15) each being cylindrical in design.

7. Method according to claim 6, **characterised in that** the cylindrical tongue (13) and the cylindrical groove (15) have a circular or elliptical or oval cross-section.

8. Method according to any of claims 1 to 7, **characterised in that** the plastics material of the one component (6) has a high viscosity relative to the plastics material of the other component (2).

9. Method according to any of claims 1 to 8, **characterised in that** the second component is a suction pipe (6) of a suction unit (1) in an internal-combustion engine, receiving the air intended for combustion therein from an air supply and distributing it to individual combustion chambers of the internal-combustion engine, and **in that** the first component is an air distributor (2) of the suction unit (1) which can be connected to the air supply of the internal-combustion engine.

10. Method according to claim 9, **characterised in that** the suction unit (1) has modular construction with an air distributor module (2) made of plastics material, with a plurality of respectively one-part suction pipe modules (6) made of plastics material which are each connected at their one pipe end (7) to the air distributor module (2) and which are each associated with one of the combustion chambers of the internal-combustion engine, and with at least one-part flange module (9) made of plastics material with which at least one of the suction pipe modules (6) is connected at its other end (8).

## Revendications

1. Procédé d'assemblage d'un premier composant (2) en matière plastique avec un second composant (6) en matière plastique,
le premier composant (2) étant muni, dans une zone d'assemblage (12) dans laquelle doit être réalisé l'assemblage avec le second composant (6), d'au moins un élément chauffant (18) formé d'un conducteur électrique,
le second composant (6) étant placé sur le premier composant (2) de telle sorte que les deux composants (2, 6) viennent au contact de l'élément chauffant (18),
les composants (2, 6) étant conformés dans la zone d'assemblage (12) à la manière d'un assemblage par emboîtement à rainure et languette,
une rainure (15) étant réalisée sur un composant (2), dans laquelle peut être emboîtée une languette (13) réalisée sur l'autre composant (6),
l'assemblage par emboîtement présentant des moyens d'étanchéité (21 ; 23) par lesquels est formé dans la rainure (15) un espace (22) étanchéifié par rapport à la masse fondue, dans lequel est disposé l'élément chauffant (18),
un procédé de soudage par résistance électrique étant mis en oeuvre, lors duquel l'élément chauffant (18) est chauffé au point que les deux composants (2, 6) fondent l'un sur l'autre et se soudent entre eux aux alentours de l'élément chauffant (18), et
une force qui empêche un déplacement des composants (2, 6) en sens inverse du sens d'emboîtement (19) agissant sur les composants (2, 6) pendant la mise en oeuvre du procédé de soudage,
**caractérisé en ce**
**que** l'élément chauffant (18) est formé d'un conducteur électrique, qui peut être chauffé sans contact par induction électromagnétique,
**que** le procédé de soudage par résistance fonctionne par électromagnétisme, de telle sorte que l'élément chauffant (18) est chauffé par induction,
**que** l'assemblage par emboîtement présente, transversalement à la direction d'emboîtement (19), un jeu (20) par lequel est formée entre la rainure (15) et la languette (13) au moins une fente d'étranglement (21) qui forme les moyens d'étanchéité, et
**que** lors de la fusion des zones de composants (16, 17) adjacentes à l'élément chauffant (18) la languette (13) pénètre plus profondément dans la rainure (15), de la masse fondue entre dans la fente d'étranglement (21), une sortie de la masse fondue hors de la rainure (15) étant alors empêchée par l'effet d'étranglement.

2. Procédé suivant la revendication 1,
**caractérisé en ce**
**qu'**une force d'emboîtement agissant dans le sens d'emboîtement (19) est appliquée sur les composants (2, 6) pendant la mise en oeuvre du procédé de soudage.

3. Procédé suivant l'une des revendications 1 et 2,
**caractérisé en ce**
**que** l'élément chauffant (18) est disposé entre un fond (16) de la rainure (15) et un côté frontal (17) de la languette (13).

4. Procédé suivant l'une des revendications 1 à 3,
**caractérisé en ce**
**que** les extensions de la fente d'étranglement (21) dans la direction d'emboîtement et transversalement à celle-ci sont dimensionnées de telle sorte qu'une montée en pression engendrée dans la masse fondue par l'effet d'étranglement produit une force de pression agissant sur la languette (13) et sur la rainure (15), en sens inverse du sens d'emboîtement (19), et qui est égale en grandeur à la force d'emboîtement lorsqu'est atteinte une profondeur de pénétration prédéfinie de la languette (13) dans la rainure (15).

5. Procédé suivant l'une des revendications 1 à 4,
**caractérisé en ce**
**qu'**un rapport entre l'extension de la fente dans la direction d'emboîtement (19) et l'extension de la fente transversalement à la direction d'emboîtement (19) se situe dans une plage de 10 à 200, en particulier de 15 à 120.

6. Procédé suivant l'une des revendications 1 à 5,
**caractérisé en ce**
**que** les composants (2, 6) ont une configuration tubulaire au moins dans la zone d'assemblage (12), la languette (13) et la rainure (15) ayant chacune une configuration cylindrique.

7. Procédé suivant la revendication 6,
**caractérisé en ce**
**que** la languette cylindrique (13) et la rainure cylindrique (15) présentent une section transversale circulaire ou elliptique ou ovale.

8. Procédé suivant l'une des revendications 1 à 7,
**caractérisé en ce**
**que** la matière plastique de l'un des composants (6) présente une viscosité élevée par rapport à la matière plastique de l'autre composant (2).

9. Procédé suivant l'une des revendications 1 à 8,
**caractérisé en ce**
**que** le second composant est un tube d'admission (6) d'un système d'admission (1), qui reçoit d'une arrivée d'air, dans un moteur à combustion interne, l'air prévu pour la combustion dans le moteur et le répartit dans les chambres de combustion individuelles du moteur à combustion interne, et que le premier composant est un distributeur d'air (2) du système d'admission (1), qui peut être raccordé à l'arrivée d'air du moteur à combustion interne.

10. Procédé suivant la revendication 9,
**caractérisé en ce**
**que** le système d'admission (1) présente une structure modulaire, comportant un module de distributeur d'air (2) en matière plastique, plusieurs modules de tubes d'admission (6) chacun d'une seule pièce en matière plastique, qui sont chacun assemblés à l'une de leurs extrémités tubulaires (7) avec le module de distributeur d'air (2), et qui sont chacun associés à l'une des chambres de combustion du moteur à combustion interne, et au moins un module de bride (9) d'une seule pièce en matière plastique, avec lequel est assemblé au moins l'un des modules de tube d'admission (6) à son autre extrémité (8).
